# EUROPEAN PATENT SPECIFICATION

(11) **EP 4 197 325 B1**
(45) Date of publication and mention of the grant of the patent: **12.03.2025**
(21) Application number: 22205155.9
(22) Date of filing: 02.11.2022
(51) Int. Cl.: A01M 7/00

(54) **FARMING MACHINE WITH FORWARD-LOOKING SENSOR SYSTEM AND ACTUATABLE BEAM**
LANDWIRTSCHAFTLICHE MASCHINE MIT NACH VORNE GERICHTETEM SENSORSYSTEM UND BETÄTIGBAREM BALKEN
MACHINE AGRICOLE AVEC SYSTÈME DE CAPTEUR ORIENTÉ VERS L'AVANT ET POUTRE ACTIONNABLE

(30) Priority: 16.12.2021 US 202117553232
(43) Date of publication of application: 21.06.2023
(73) Proprietor: Blue River Technology Inc., Santa Clara, CA 95054 (US)
(72) Inventor: MONTGOMERY, Paul Yalden, Santa Clara California 95054 (US); REDDEN, Lee Kamp, Santa Clara, California 95054 (US)
(74) Representative: Scintilla Intellectual Property Ltd

(56) References cited:
- EP-A1- 3 699 639
- EP-A1- 3 987 928
- WO-A1-2016/128577
- WO-A2-2014/039664
- DE-A1- 102015 119 073
- US-A1- 2017 027 103
- US-A1- 2019 150 357

## Description

### BACKGROUND

### FIELD OF DISCLOSURE

This disclosure relates to a farming machine with a forward-looking sensor system and an actuatable beam, and more specifically, to proactively adjusting the position of the beam based on data from the sensor system.

### DESCRIPTION OF THE RELATED ART

Farming machines may move through a field and perform farming actions to the field or crops growing in the field. To perform farming actions, the farming machine supports one or more treatment mechanisms by a beam. However, the beam and treatment mechanisms may be damaged as the farming machine moves through the field. For example, the beam may strike the ground or an object in the field. Similar methods to those of the present disclosure may be found in EP 3 699 639 A1.

### SUMMARY

The present invention provides a farming machine according to claim 1, a method according to claim 9 and a non-transitory computer-readable storage medium according to claim 15.

Embodiments relate to a farming machine that includes an actuatable beam, an actuator system, a sensor system, and a control system. The beam extends away from the body of the farming machine. The beam may support a treatment mechanism. The actuator system controls a position of the actuatable beam relative to the body of the farming machine. The sensor system includes one or more sensors and generates measurement data. This measurement data indicate distances and angles between the sensor system and ground points in the field. The measurement data may also indicate heights of plants growing in the field. The ground points in the field are at least a first threshold distance (e.g., 0.5 meters) in front of a component of the farming machine (e.g., the beam, the body, or a locomoting mechanism). The control system determines a target (or desired) beam height for each ground point. Based on the measurement data and the target beam heights, the control system drives/commands/actuates the actuator system to adjust the position of the beam as the farming machine moves toward the ground points. As a result of the position adjustments, the height of the beam relative to the field is equal to (e.g., within a second threshold of) each target beam height prior to the component passing over the corresponding ground points.

Among other advantages, the farming machine reduces the likelihood of the beam (or an object coupled to the beam) striking the ground or an object in the field. The farming machine may also increase the stability of the beam and reduce beam height variability as it moves through the field.

To generate measurement (e.g., distance) data for ground points in front of the component, the sensor system may be oriented along a forward direction and a downward direction. Forward looking information allows the control system to adjust the beam while accounting for the dynamics and limits of the actuator system. The sensor system may be coupled to the beam or to the body of the farming machine. The sensor system may include a LIDAR sensor. The sensor system may also include an IMU sensor or potentiometer sensor.

The control system may determine the target actuatable beam heights based on at least one of: a sensing distance of the sensor system, a sensing angle of the sensing system, a speed of the farming machine moving through the field, an actuator authority of the actuator system, a crop in the field, a height of the crop in the field, a treatment mechanism coupled to the actuatable beam, or a height variability of the ground. Responsive to the height variability of the ground exceeding a threshold variability value, the control system may raise the actuatable beam to a predetermined safety position. The beam in the safety position is unlikely to strike the ground or objects in the field.

For brevity, the description herein refers to adjusting the position of a beam of a farming machine. Additionally, or alternatively, the actuator system may include actuators to control other components of the farming machine. For example, the actuator system may control a position of an intermediate body that supports the beams. In another example, the actuator system controls a chassis of the farming machine. The positions of these other components may be adjusted using similar methods and systems as described herein.

### BRIEF DESCRIPTION OF DRAWINGS

FIG. 1A illustrates an isometric view of a farming machine, in accordance with a first example embodiment.
FIG. 1B illustrates a top view of a farming machine, in accordance with the first embodiment.
FIG. 1C illustrates an isometric view of a farming machine, in accordance with a second example embodiment.
FIG. 2 is a block diagram of the system environment for the farming machine, in accordance with one or more example embodiments.
FIGS. 3A-3C are front views of a farming machine moving through different portions of a field, in accordance with one or more example embodiments.
FIG. 4A illustrates a cross-sectional view of a sensor and beam of the farming machine from FIGS. 3A-3C, in accordance with one or more example embodiments.
FIGS. 4B-4C illustrate a sample ground point pattern for a sensor), in accordance with one or more example embodiments.
FIG. 5 illustrates example target heights for the ground points illustrated in FIG. 4A, in accordance with one or more example embodiments.
FIG. 6 illustrates a terrain map of a field, in accordance with one or more example embodiments.
FIG. 7 illustrates a method for adjusting a beam of a farming machine moving through a field, in accordance with one or more example embodiments.
FIG. 8 is a block diagram illustrating components of an example machine for reading and executing instructions from a machine-readable medium, in accordance with one or more example embodiments.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

### I. INTRODUCTION

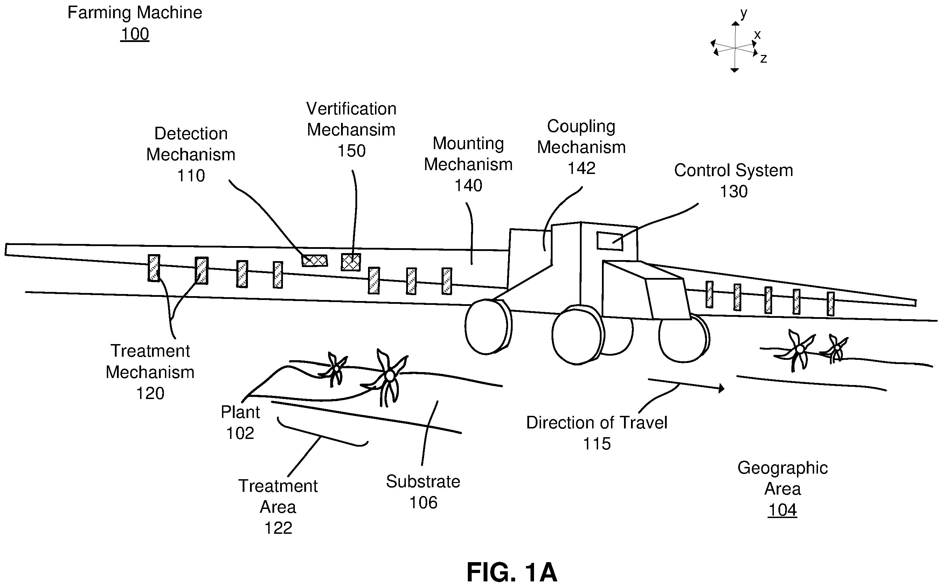

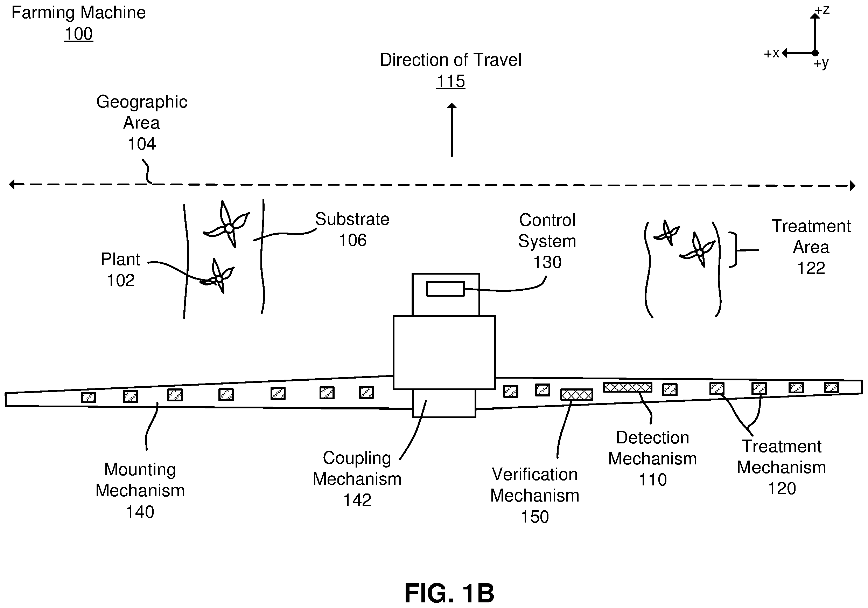

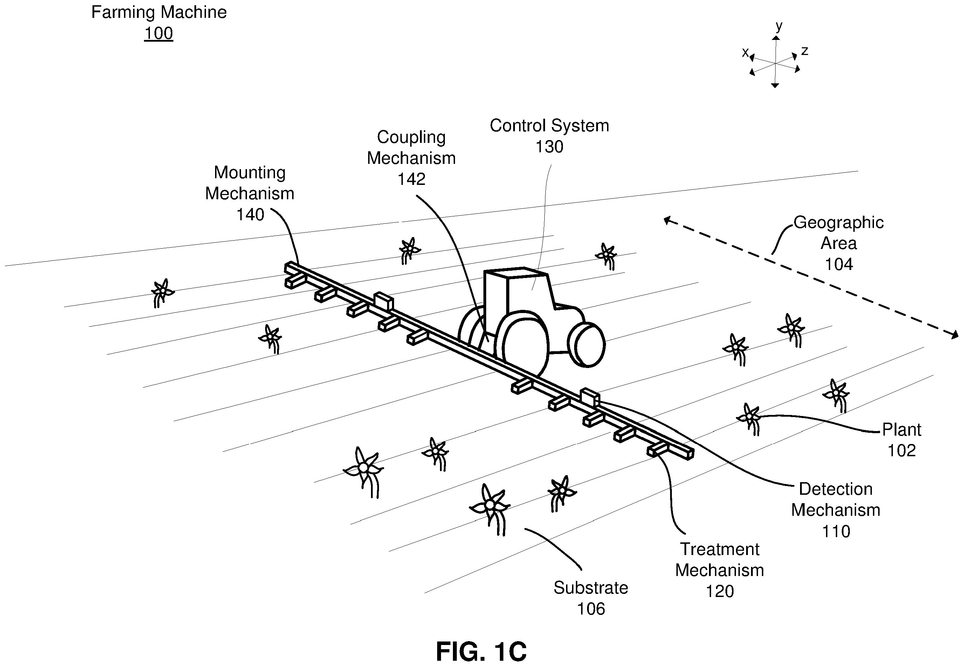

Embodiments relate to a farming machine with a forward-looking sensor system and an actuatable beam. This allows the farming machine to proactively adjust the position of the beam based on data from the sensor system. Before describing embodiments of this farming machine, FIGS. 1-2 describe general information related to example farming machines.

### II. FIELD MANAGEMENT AND TREATMENT PLANS

Agricultural managers ("managers") are responsible for managing farming operations in one or more fields. Managers work to implement a farming objective within those fields and select from among a variety of farming actions to implement that farming objective. Traditionally, managers are a farmer or agronomist that works the field but could also be other systems configured to manage farming operations within the field. For example, a manager could be an automated farming machine (e.g., farming machine 100 below), a machine learned computer model, etc. In some cases, a manager may be a combination of the managers described above. For example, a manager may include a farmer assisted by a machine learned agronomy model and one or more automated farming machine or could be a farmer and an agronomist working in tandem.

Managers implement one or more farming objectives for a field. A farming objective is a macro-level goal for a field. For example, macro-centric farming objectives may include treating crops with growth promotors, neutralizing weeds with growth regulators, harvesting a crop with the best possible crop yield, or any other suitable farming objective. However, farming objectives may also be a more micro level goal for the field. For example, micro-centric farming objectives may include treating a particular plant in the field, repairing or correcting a part of a farming machine, requesting feedback from a manager, etc. Of course, there are many possible farming objectives, and the aforementioned examples are not intended to be limiting.

Faming objectives may be accomplished by one or more farming machines performing a series of farming actions. Farming machines are described in greater detail below. Farming actions are any operation implementable by a farming machine within the field that works towards a farming objective. Consider, for example, the farming objective of harvesting a crop with the best possible yield. This farming objective requires a litany of farming actions, e.g., planting the field, fertilizing the plants, watering the plants, weeding the field, harvesting the plants, evaluating yield, etc. Similarly, each farming action pertaining to harvesting the crop may be a farming objective in and of itself. For instance, planting the field can require its own set of farming actions, e.g., preparing the soil, digging in the soil, planting a seed, etc.

In other words, managers accomplish a farming objective by implementing a treatment plan in the field. A treatment plan is a hierarchical set of macro-centric and/or micro-centric objectives that accomplish the farming objective of the manager. Within a treatment plan, each macro or micro-objective may require a set of farming actions to accomplish, or each macro or micro-objective may be a farming action itself.

A treatment plan is generally a temporally sequenced set of farming actions to apply to the field that the manager expects will accomplish the farming objective. A result is a representation as to whether, or how well, a farming machine accomplished a farming objective. A result may be a qualitative measure such as "accomplished" or "not accomplished," or may be a quantitative measure such as "40 pounds harvested," or "1.25 acres treated." Results can be positive or negative, depending on the configuration of the farming machine or implemented treatment plan. Moreover, results can be measured by sensors of the farming machine, input by managers, or accessed from a datastore or a network.

### III. FARMING MACHINE

### Overview

A farming machine that implements farming actions of a treatment plan may have a variety of configurations, some of which are described in greater detail below.

FIG. 1A is an isometric view of a farming machine 100 that performs farming actions of a treatment plan, according to one example embodiment, and FIG. 1B is a top view of the farming machine 100 in FIG. 1A. FIG. 1C is an isometric view of another farming machine 100 that performs actions of a treatment plan, in accordance with one example embodiment.

The farming machine 100 includes a detection mechanism 110, a treatment mechanism 120, and a control system 130. The farming machine 100 can additionally include a mounting mechanism 140, a verification mechanism 150, a power source, digital memory, communication apparatus, or any other suitable component that enables the farming machine 100 to implement farming actions in a treatment plan. The farming machine 100 can include additional or fewer components than described herein. Furthermore, the described components and functions of the farming machine 100 are just examples, and a farming machine 100 can have different or additional components and functions other than those described below.

The farming machine 100 is configured to perform farming actions in a field, and the implemented farming actions are part of a treatment plan. To illustrate, the farming machine 100 implements a farming action which applies a treatment to one or more plants 102, the ground, or the substrate 106 within a geographic area. Here, the treatment farming actions are included in a treatment plan to regulate plant growth. As such, treatments are typically applied directly to a single plant 102, but can alternatively be directly applied to multiple plants, indirectly applied to one or more plants, applied to the environment associated with the plant (e.g., soil, atmosphere, or other suitable portion of the plant environment adjacent to or connected by an environmental factor, such as wind), or otherwise applied to the plants.

In a particular example, the farming machine 100 is configured to implement a farming action which applies a treatment that necroses the plant (e.g., weeding) or part of the plant (e.g., pruning). In this case, the farming action can include dislodging the plant from the supporting substrate 106, incinerating a portion of the plant (e.g., with an electromagnetic wave such as a laser), applying a treatment concentration of working fluid (e.g., fertilizer, hormone, water, etc.) to the plant, or treating the plant in any other suitable manner.

In another particular example, the farming machine 100 is configured to implement a farming action which applies a treatment to regulate plant growth. Regulating plant growth can include promoting plant growth, promoting growth of a plant portion, hindering (e.g., retarding) plant or plant portion growth, or otherwise controlling plant growth. Examples of regulating plant growth includes applying growth hormone to the plant, applying fertilizer to the plant or substrate, applying a disease treatment or insect treatment to the plant, electrically stimulating the plant, watering the plant, pruning the plant, or otherwise treating the plant. Plant growth can additionally be regulated by pruning, necrosing, or otherwise treating the plants adjacent to the plant.

### Operating environment

The farming machine 100 operates in an operating environment. The operating environment is the environment surrounding the farming machine 100 while it implements farming actions of a treatment plan. The operating environment also includes the farming machine 100 and its corresponding components.

The operating environment may include a field. As such, the farming machine 100 implements farming actions of the treatment plan in the field. A field is a geographic area where the farming machine 100 implements a treatment plan. The field may be an outdoor plant field but could also be an indoor location that house plants such as, e.g., a greenhouse, a laboratory, a grow house, a set of containers, or any other suitable environment.

The field may include any number of field portions. A field portion is a subunit of a field. For example, a field portion may be a portion of the field small enough include a single plant, large enough to include many plants, or some other size. The farming machine 100 can execute different farming actions for different field portions. For example, the farming machine 100 may apply an herbicide for some field portions in the field, while applying a pesticide in another field portion. Moreover, a field and a field portion are largely interchangeable in the context of the methods and systems described herein. That is, treatment plans and their corresponding farming actions may be applied to an entire field or a field portion depending on the circumstances at play.

Depending on the application, the boundaries of the field portions may be determined by an agricultural manager, for example, based on the shape and size of the field. In some embodiments, the boundaries of the portions depend on the size of the farming machine, the speed of the machine as it moves through the field, how often the farming machine performs farming actions, and how often the farming machine generates farming action data. For example, if a header of a harvester farming machine is 30-45 feet wide and it generates crop yield data every 5-10 feet, then the field portions may be 30-45 feet wide and 5-10 feet long.

The operating environment may also include plants. As such, farming actions the farming machine 100 implements as part of a treatment plan may be applied to plants in the field. The plants can be crops but could also be weeds or any other suitable plant. Some example crops include cotton, lettuce, soybeans, rice, carrots, tomatoes, corn, broccoli, cabbage, potatoes, wheat, or any other suitable commercial crop. The weeds may be grasses, broadleaf weeds, thistles, or any other suitable determinantal weed.

More generally, plants 102 may include a stem that is arranged superior to (e.g., above) the substrate 106 and a root system joined to the stem that is located inferior to the substrate plane (e.g., below ground). The stem may support any branches, leaves, and/or fruits. The plant can have a single stem, leaf, or fruit, multiple stems, leaves, or fruits, or any number of stems, leaves or fruits. The root system may be a tap root system or fibrous root system, and the root system may support the plant position and absorb nutrients and water from the substrate 106. In various examples, the plant may be a vascular plant, non-vascular plant, ligneous plant, herbaceous plant, or be any suitable type of plant.

Plants in a field may be grown in one or more plant rows (e.g., plant beds). The plant rows are typically parallel but do not have to be. Each plant row is generally spaced between 2 inches and 45 inches apart when measured in a perpendicular direction from an axis representing the plant row. Plant rows can have wider or narrower spacings or could have variable spacing between multiple rows (e.g., a spacing of 12 in. between a first and a second row, a 16 in. spacing between a second and a third row, etc.).

Plants 102 within a field may include the same type of crop (e.g., same genus, same species, etc.). For example, each field portion in a field may include corn crops. However, the plants within each field may also include multiple crops (e.g., a first, a second crop, etc.). For example, some field portions in a field may include lettuce crops while others include pig weeds, or, in another example, some field portions in a field may include beans while others include corn. Additionally, a single field portion may include different types of crop. For example, a single field portion may include a soybean plant and a grass weed.

The operating environment may also include a substrate. As such, farming actions the farming machine 100 implements as part of a treatment plan may be applied to the substrate. The substrate 106 may be soil but can alternatively be a sponge or any other suitable substrate. The substrate may include plants or may not include plants depending on its location in the field. For example, a portion of the substrate may include a row of crops, while the portion of the substrate between crop rows includes no plants.

### IV.A EXAMPLE MACHINE CONFIGURATIONS

### Detection mechanism(s)

The farming machine 100 may include a detection mechanism 110. The detection mechanism 110 identifies objects in the operating environment of the farming machine 100. To do so, the detection mechanism 110 obtains information describing the environment (e.g., sensor or image data), and processes that information to identify pertinent objects (e.g., plants, substrate, persons, etc.) in its surrounding environment. Identifying objects in the environment further enables the farming machine 100 to implement farming actions in the field. For example, the detection mechanism 110 may capture an image of the field and process the image with a plant identification model to identify plants in the captured image. The farming machine 100 then implements farming actions in the field based on the plants identified in the image.

The farming machine 100 can include any number or type of detection mechanism 110 that may aid in determining and implementing farming actions. In some embodiments, the detection mechanism 110 includes one or more sensors. For example, the detection mechanism 110 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the detection mechanism 110 may include an array of sensors (e.g., an array of cameras) configured to capture information about the environment surrounding the farming machine 100. For example, the detection mechanism 110 may include an array of cameras configured to capture an array of pictures representing the environment surrounding the farming machine 100. The detection mechanism 110 may also be a sensor that measures a state of the farming machine. For example, the detection mechanism may be a speed sensor, a heat sensor, or some other sensor that can monitor the state of a component of the farming machine. Additionally, the detection mechanism 110 may also be a sensor that measures components during implementation of a farming action. For example, the detection mechanism 110 may be a flow rate monitor, a grain harvesting sensor, a mechanical stress sensor etc. Whatever the case, the detection mechanism senses information about the operating environment.

A detection mechanism 110 may be mounted at any point on the mounting mechanism 140. Depending on where the detection mechanism 110 is mounted relative to the treatment mechanism 120, one or the other may pass over a geographic area 104 in the field before the other. For example, the detection mechanism 110 may be positioned on the mounting mechanism 140 such that it traverses over a geographic area 104 before the treatment mechanism 120 as the farming machine 100 moves through the field. In another example, the detection mechanism 110 is positioned to the mounting mechanism 140 such that the two traverse over a geographic location at substantially the same time as the farming machine 100 moves through the field. Similarly, the detection mechanism 110 may be positioned on the mounting mechanism 140 such that the treatment mechanism 120 traverses over a geographic location before the detection mechanism 110 as the farming machine 100 moves through the field. The detection mechanism 110 may be statically mounted to the mounting mechanism 140, or may be removably coupled to the mounting mechanism 140. In other examples, the detection mechanism 110 may be mounted to some other surface of the farming machine 100 or may be incorporated into another component of the farming machine 100.

### Verification mechanism(s)

The farming machine 100 may include a verification mechanism 150. Generally, the verification mechanism 150 records a measurement of the operating environment and the farming machine 100 may use the recorded measurement to verify or determine the extent of an implemented farming action.

To illustrate, consider an example where a farming machine 100 implements a farming action based on a measurement of that environment by the detection mechanism 110. The verification mechanism 150 records a measurement of the same geographic area measured by the detection mechanism 110 and where farming machine 100 implemented the determined farming action. The farming machine 100 then processes the recorded measurement to determine the extent of the farming action. For example, the verification mechanism 150 may record an image of the geographic region surrounding a plant identified by the detection mechanism 110 and treated by a treatment mechanism 120. The farming machine 100 may apply a treatment detection algorithm to the recorded image to determine the extent of the treatment applied to the plant.

Information recorded by the verification mechanism 150 can also be used to empirically determine operation parameters of the farming machine 100 (e.g., calibrate) that will obtain the desired effects of implemented farming actions. For instance, the farming machine 100 may apply a calibration detection algorithm to a measurement recorded by the farming machine 100. In this case, the farming machine 100 determines whether the actual effects of an implemented farming action are the same as its intended effects. If the effects of the implemented farming action are different than its intended effects, the farming machine 100 may perform a calibration process. The calibration process changes operation parameters of the farming machine 100 such that effects of future implemented farming actions are the same as their intended effects. To illustrate, consider the previous example where the farming machine 100 recorded an image of a treated plant. There, the farming machine 100 may apply a calibration algorithm to the recorded image to determine whether the treatment is appropriately calibrated (e.g., at its intended location in the operating environment). If the farming machine 100 determines that the farming machine is not calibrated (e.g., the applied treatment is at an incorrect location), the farming machine 100 may calibrate itself such that future treatments are in the correct location. Other example calibrations are also possible.

The verification mechanism 150 can have various configurations. For example, the verification mechanism 150 can be substantially similar (e.g., be the same type of mechanism as) the detection mechanism 110 or can be different from the detection mechanism 110. In some cases, the detection mechanism 110 and the verification mechanism 150 may be one in the same (e.g., the same sensor). In an example configuration, the verification mechanism 150 is positioned distal the detection mechanism 110 relative the direction of travel, and the treatment mechanism 120 is positioned there between. In this configuration, the verification mechanism 150 traverses over a geographic location in the operating environment after the treatment mechanism 120 and the detection mechanism 110. However, the mounting mechanism 140 can retain the relative positions of the system components in any other suitable configuration. In some configurations, the verification mechanism 150 can be included in other components of the farming machine 100.

The farming machine 100 can include any number or type of verification mechanism 150. In some embodiments, the verification mechanism 150 includes one or more sensors. For example, the verification mechanism 150 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the verification mechanism 150 may include an array of sensors (e.g., an array of cameras) configured to capture information about the environment surrounding the farming machine 100. For example, the verification mechanism 150 may include an array of cameras configured to capture an array of pictures representing the operating environment.

### Treatment Mechanism(s)

The farming machine 100 may include a treatment mechanism 120. The treatment mechanism can implement farming actions in the operating environment of a farming machine. For instance, a farming machine may include a treatment mechanism 120 that applies a treatment to a plant, a substrate, or some other object in the operating environment. More generally, the farming machine 100 employs the treatment mechanism 120 to apply a treatment to a treatment area 122, and the treatment area 122 may include anything within the operating environment. That is, the treatment area 122 may be any portion of the operating environment.

When the treatment is a plant treatment, the treatment mechanism 120 applies a treatment to a plant in the field. The treatment mechanism 120 may apply treatments to identified plants or non-identified plants. For example, the farming machine 100 may identify and treat a specific plant in the field. Alternatively, or additionally, the farming machine 100 may identify some other trigger that indicates a plant treatment and the treatment mechanism 120 may apply a plant treatment. Some example plant treatment mechanisms include: one or more spray nozzles, one or more electromagnetic energy sources, one or more physical implements configured to manipulate plants, but other plant treatment mechanisms are also possible.

Additionally, when the treatment is a plant treatment, the effect of treating a plant with a treatment mechanism may include any of plant necrosis, plant growth stimulation, plant portion necrosis or removal, plant portion growth stimulation, or any other suitable treatment effect. Moreover, the treatment mechanism can apply a treatment that dislodges a plant from the substrate, severs a plant or portion of a plant (e.g., cutting), incinerates a plant or portion of a plant, electrically stimulates a plant or portion of a plant, fertilizes or promotes growth (e.g., with a growth hormone) of a plant, waters a plant, applies light or some other radiation to a plant, and/or injects one or more working fluids into the substrate 106 adjacent to a plant (e.g., within a threshold distance from the plant). Other plant treatments are also possible. When applying a plant treatment, the treatment mechanisms 120 may be configured to spray one or more of: an herbicide, a fungicide, insecticide, some other pesticide, or water.

When the treatment is a substrate treatment, the treatment mechanism applies a treatment to some portion of the substrate in the field. The treatment mechanism 120 may apply treatments to identified areas of the substrate, or non-identified areas of the substrate. For example, the farming machine 100 may identify and treat an area of substrate in the field. Alternatively, or additionally, the farming machine 100 may identify some other trigger that indicates a substrate treatment and the treatment mechanism 120 may apply a treatment to the substrate. Some example treatment mechanisms configured for applying treatments to the substrate include: one or more spray nozzles, one or more electromagnetic energy sources, one or more physical implements configured to manipulate plants, but other plant treatment mechanisms are also possible.

Of course, the farming machine 100 is not limited to treatment mechanisms for plants and substrates in the field. The farming machine 100 may include treatment mechanisms for applying various other treatments to objects in the field. Some other example treatment mechanisms may include components for applying nitrogen to the field and harvesting plant parts from crop plants growing in the field.

Depending on the configuration, the farming machine 100 may include various numbers of treatment mechanisms 120 (e.g., 1, 2, 5, 20, 60, etc.). A treatment mechanism 120 may be fixed (e.g., statically coupled) to the mounting mechanism 140 or attached to the farming machine 100. Alternatively, or additionally, a treatment mechanism 120 may be movable (e.g., translatable, rotatable, etc.) on the farming machine 100. In one configuration, the farming machine 100 includes a single treatment mechanism 120. In this case, the treatment mechanism 120 may be actuatable to align the treatment mechanism 120 to a treatment area 122. In a second variation, the farming machine 100 includes a treatment mechanism assembly comprising an array of treatment mechanisms. In this configuration, a treatment mechanism 120 may be a single treatment mechanism 120, a combination of treatment mechanisms 120, or the treatment mechanism assembly. Thus, either a single treatment mechanism, a combination of treatment mechanisms, or the entire assembly may be selected to apply a treatment to a treatment area. Similarly, either the single, combination, or entire assembly may be actuated to align with a treatment area, as needed. In some configurations, the farming machine may align a treatment mechanism with an identified object in the operating environment. That is, the farming machine may identify an object in the operating environment and actuate the treatment mechanism such that its treatment area aligns with the identified object.

A treatment mechanism 120 may be operable between a standby mode and a treatment mode. In the standby mode the treatment mechanism 120 does not apply a treatment, and in the treatment mode the treatment mechanism 120 is controlled by the control system 130 to apply the treatment. However, the treatment mechanism 120 can be operable in any other suitable number of operation modes.

### Control System(s)

The farming machine 100 includes a control system 130. The control system 130 controls operation of the various components and systems on the farming machine 100. For instance, the control system 130 can obtain information about the operating environment, processes that information to identify a farming action to implement, and implements the identified farming action with system components of the farming machine.

The control system 130 can receive information from the detection mechanism 110, the verification mechanism 150, the treatment mechanism, and/or any other component or system of the farming machine 100. For example, the control system may receive measurements from the detection mechanism 110 or verification mechanism 150, or information relating to the state of a treatment mechanism or implemented farming actions from a detection mechanism 110. Other information is also possible.

Similarly, the control system 130 can provide input to the detection mechanism 110, the verification mechanism 150, and/or the treatment mechanism. For instance, the control system 130 may be configured with input and control operating parameters of the farming machine 100 (e.g., speed, direction). Similarly, the control system 130 may be configured to input and control operating parameters of the detection mechanism 110 and/or verification mechanism 150. Operating parameters of the detection mechanism 110 and/or verification mechanism 150 may include processing time, location and/or angle of the detection mechanism 110, image capture intervals, image capture settings, etc. Other inputs are also possible.

The control system 130 can be operated by a manager operating the farming machine 100, wholly or fully autonomous, operated by a manager connected to the farming machine 100 by a network, or any combination of the above. For instance, the control system 130 may be operated by an agricultural manager sitting in a cabin of the farming machine 100, or the control system 130 may be operated by an agricultural manager connected to the control system via a wireless network. In another example, the control system may implement an array of control algorithms, machine vision algorithms, decision algorithms, etc. that allow it to operate autonomously or partially autonomously.

The control system 130 may be implemented by a computer or a system of distributed computers. The computers may be connected in various network environments. For example, the control system may be a series of computers implemented on the farming machine 100 and connected by a local area network. In another example, the control system may be a series of computers implemented on the farming machine 100, in the cloud, a client device and connected by a wireless area network.

The control system 130 can apply one or more computer models to determine and implement farming actions in the field. For example, the control system 130 can apply a plant identification module to images acquired by the detection mechanism to determine and implement farming actions. The control system 130 may be coupled to the farming machine 100 such that an agricultural manager (e.g., a driver) can interact with the control system 130. In other embodiments, the control system 130 is physically removed from the farming machine 100 and communicates with system components (e.g., detection mechanism 110, treatment mechanism 120, etc.) wirelessly.

In some configurations, the farming machine 100 may additionally include a communication apparatus, which functions to communicate (e.g., send and/or receive) data between the control system 130 and a set of remote devices. The communication apparatus can be a Wi-Fi communication system, a cellular communication system, a short-range communication system (e.g., Bluetooth, NFC, etc.), or any other suitable communication system.

### Other Machine Components

In various configurations, the farming machine may include any number of additional components.

For instance, the farming machine may include a mounting mechanism 140. The mounting mechanism 140 provides a mounting point for the components of the farming machine 100. That is, the mounting mechanism 140 may be a chassis or frame to which components of the farming machine 100 may be attached but could alternatively be any other suitable mounting mechanism 140. More generally, the mounting mechanism 140 statically retains and mechanically supports the positions of the detection mechanism 110, the treatment mechanism 120, and the verification mechanism 150. In an example configuration, the mounting mechanism 140 extends outward from a body of the farming machine 100 such that the mounting mechanism 140 is approximately perpendicular to the direction of travel 115. In some configurations, the mounting mechanism may include an array of treatment mechanisms 120 positioned laterally along the mounting mechanism 140. In some configurations, the farming machine may not include a mounting mechanism 140, the mounting mechanism 140 may be alternatively positioned, or the mounting mechanism 140 may be incorporated into any other component of the farming machine 100.

The farming machine 100 may include locomoting mechanisms. The locomoting mechanisms may include any number of wheels, continuous treads, articulating legs, or some other locomoting mechanism(s). For instance, the farming machine may include a first set and a second set of coaxial wheels, or a first set and a second set of continuous treads. In either example, the rotational axis of the first and second set of wheels/treads are approximately parallel. Further, each set is arranged along opposing sides of the farming machine. Typically, the locomoting mechanisms are attached to a drive mechanism that causes the locomoting mechanisms to translate the farming machine through the operating environment. For instance, the farming machine may include a drive train for rotating wheels or treads. In different configurations, the farming machine may include any other suitable number or combination of locomoting mechanisms and drive mechanisms.

The farming machine 100 may also include one or more coupling mechanisms 142 (e.g., a hitch). Coupling mechanisms 142 functions to removably or statically couple various components of the farming machine. For example, a coupling mechanism 142 may attach a drive mechanism to a secondary component such that the secondary component is pulled behind the farming machine. In another example, a coupling mechanism 142 may couple one or more treatment mechanisms to the farming machine.

The farming machine 100 may additionally include a power source, which functions to power the system components, including the detection mechanism 110, control system 130, and treatment mechanism 120. The power source can be mounted to the mounting mechanism 140, can be removably coupled to the mounting mechanism 140, or can be incorporated into another system component (e.g., located on the drive mechanism). The power source can be a rechargeable power source (e.g., a set of rechargeable batteries), an energy harvesting power source (e.g., a solar system), a fuel consuming power source (e.g., a set of fuel cells or an internal combustion system), or any other suitable power source. In other configurations, the power source can be incorporated into any other component of the farming machine 100.

### IV.B SYSTEM ENVIRONMENT

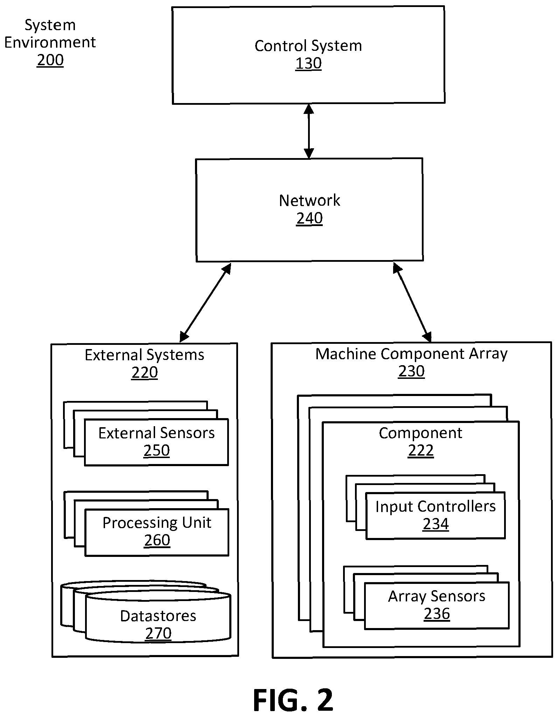

FIG. 2 is a block diagram of the system environment for the farming machine 100, in accordance with one or more example embodiments. In this example, the control system 130 is connected to external systems 220 and a machine component array 230 via a network 240 within the system environment 200.

The external systems 220 are any system that can generate data representing information useful for determining and implementing farming actions in a field. External systems may include one or more sensors 250, one or more processing units 260, and one or more datastores 270. The one or more sensors 250 can measure the field, the operating environment, the farming machine, etc. and generate data representing those measurements. For instance, the sensors may include a rainfall sensor, a wind sensor, heat sensor, a camera, etc. The processing units may process measured data to provide additional information that may aid in determining and implementing farming actions in the field. For instance, a processing unit may access an image of a field and calculate a weed pressure from the image or may access historical weather information for a field to generate a forecast for the field. Datastores store historical information regarding the farming machine, the operating environment, the field, the area surrounding the farming machine, etc. that may be beneficial in determining and implementing farming actions in the field. For instance, the datastore may store results of previously implemented treatment plans and farming actions for a field, its surrounding field, and the general air. Further, the datastore may store results of specific farming actions in the field, or results of farming actions taken in nearby fields having similar characteristics. The datastore may also store historical weather, flooding, field use, planted crops, etc. for the field and the surrounding area. Finally, the datastores may store any information measured by other components in the system environment.

The machine component array 230 includes one or more components 222. Components 222 are elements of the farming machine 100 that can take farming actions (e.g., a treatment mechanism 120). As illustrated, each component 222 has one or more input controllers 234 and one or more sensors 236, but a component may include only sensors 236 or only input controllers 234. An input controller 234 controls the function of the component. For example, an input controller 234 may receive machine commands via the network 240 and actuate the component in response. A sensor 236 generates data representing measurements of the operating environment and provides that data to other components within the system environment 200. The measurements may be of the component, the farming machine 100, or the operating environment. For example, a sensor 236 may measure a configuration or state of the component 222 (e.g., a setting, parameter, power load, etc.), measure conditions in the operating environment (e.g., moisture, temperature, etc.), capture information representing of the operating environment (e.g., images, depth information, distance information), and generate data representing the measurement(s).

The network 240 connects nodes of the system environment 200 to allow microcontrollers and devices to communicate with each other. In some embodiments, the components are connected within the network as a Controller Area Network (CAN). In this case, within the network each element has an input and output connection, and the network 240 can translate information between the various elements. For example, the network 240 receives input information from the external systems 220 and the component array 230, processes the information, and transmits the information to the control system 130. The control system 130 generates a farming action based on the information and transmits instructions to implement the farming action, for example, to the appropriate component(s) 222 of the component array 230.

Additionally, the system environment 200 may be other types of network environments and include other networks, or a combination of network environments with several networks. For example, the system environment 200, can be a network such as the Internet, a LAN, a MAN, a WAN, a mobile wired or wireless network, a private network, a virtual private network, a direct communication line, and the like.

### V. FORWARD-LOOKING SENSOR SYSTEM AND ACTUATABLE BEAM

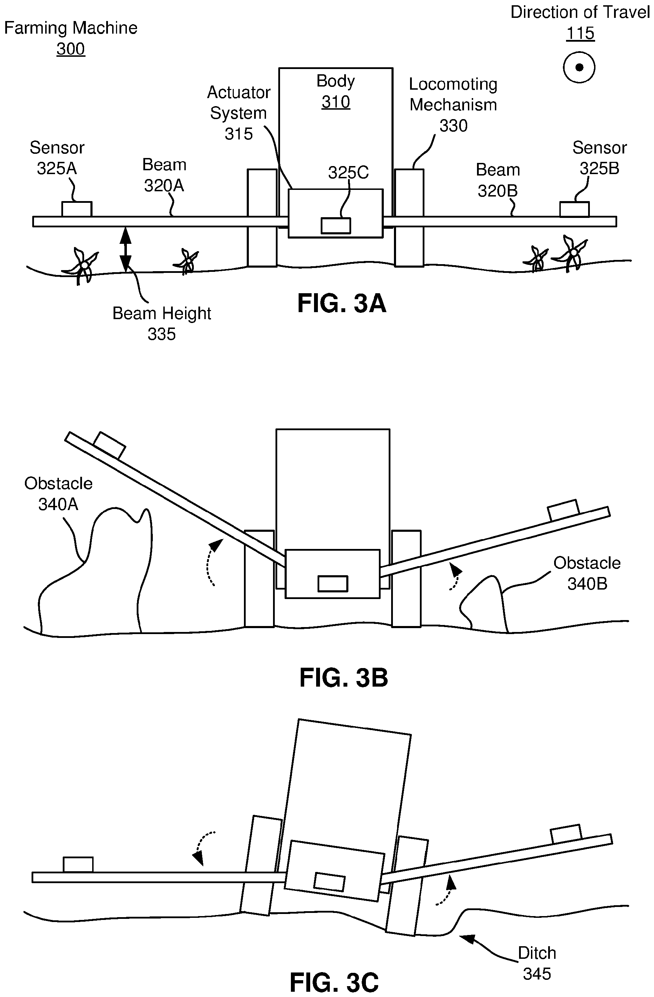

FIGS. 3A-7 relate to farming machines with forward-looking sensors and actuatable beams (e.g., mounting mechanisms 140). These FIGS. also relate to methods and systems for adjusting positions of the actuatable beams.

FIGS. 3A-3C are front views of a farming machine 300 moving through different portions of a field, according to some embodiments. The farming machine 300 includes an actuator system 315 coupled to two beams 320A and 320B. In the example of FIGS. 3A-3C, the beams 320 are coupled to the front of the body 310. The beams 320 extend away from the body 310 and support sensors 325A and 325B. The farming machine 300 includes a third sensor 325C also coupled to the actuator system 315. The farming machine 300 may include additional, fewer, or different components than illustrated in FIGS. 3A-3C. For example, the beams 320 support treatment mechanisms 120 and verification mechanisms 150.

A sensor 325 is a detection mechanism (e.g., detection mechanism 110, sensor 250, or array sensor 236) configured to detect the height of the ground. More specifically, the sensor 325 generates data indicative of a distance and angles between the sensor 325 and a ground point in the field. The data may be referred to as measurement data or sensor data. In some embodiments, the angles are two orthogonal angles, such as (1) the polar and azimuthal angles or (2) angles that describe the vertical and horizontal positions of the ground point (e.g., from the sensor frame of reference). Thus, with the three independent position coordinates (e.g., one distance and two angle measurements), the position of a ground point may be determined. A sensor 325 may generate distance and angle data for multiple ground points. In some embodiments, the sensor 325A also generates measurement data indicative of the height of plants growing in the field. Said differently, the measurement data may indicate the positions of tops of the plants.

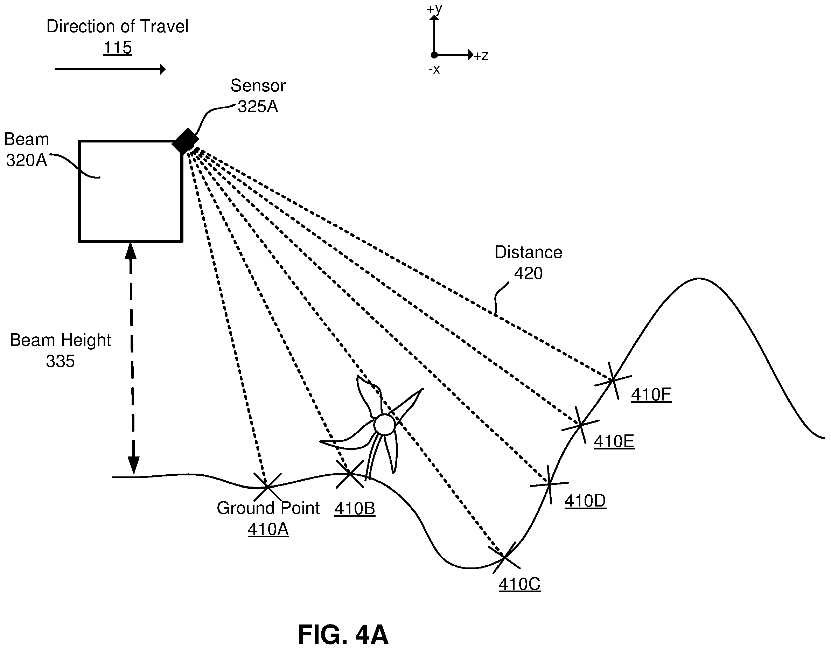

A sensor 325 may be oriented to generate measurement data for ground points in front of a component of the farming machine 300, such as a beam 320, the body 310, or a locomoting mechanism 330. For example, sensor 325A may be oriented forward (along the direction of travel) and downward to generate measurement data for ground points in front of beam 320A. This is further described with respect to FIGS. 4A-C. In another example, sensor 325C may be oriented to detect the height of ground points in front of the locomoting mechanism 330. Example sensors 325 include a LIDAR sensor, an image sensor (e.g., a stereo camera or a monocamera with depth identification algorithms), an ultrasonic sensor, and a radio frequency sensor. Multiple sensors 325 at different locations may be used together to increase the accuracy of the ground sensing. For example, farming machine 300 may additionally include a sensor mounted to the body 310 and oriented to have a sensing area in front of beam 320A and overlapping with a sensing area of sensor 325A.

In some embodiments, the farming machine 300 additionally includes an IMU (inertial measurement unit) sensor, a potentiometer sensor, or a GNSS (global navigation satellite system) tracker (e.g., a GPS tracker). An IMU sensor or potentiometer sensor may be used to detect (e.g., confirm) movement of the beam 320 or body 310. A GNSS tracker may be used to generate GNSS position coordinates of the field (e.g., on a global or regional basis). The control system 130 may associate data from other sensors with these position coordinates.

The actuator system 315 includes one or more actuators to control positions of beams 320 relative to the body 310. This may result in the height of a beam changing relative to the ground. Example actuators include hydraulic, pneumatic, and electrical actuators. The actuators may be rotational or translational actuators. In the examples of FIGS. 3B and 3C, the actuator system 315 rotates the beams (indicated by the arrows), however other position adjustments are possible depending on the configuration of the actuator system. For example, the actuator system 315 may raise or lower the entire beam 320 equally. Generally, the actuator system raises and lowers the beams 320. However, the actuator system 315 may move the beams 320 along other directions, such as forward or backward. Movement along these additional directions may also be used to prevent the beam 320 from striking the ground. The actuator system 315 may be characterized by its actuator authority for each beam 320. The actuator authority is a measure of how quickly the system can move a beam 320 responsive to receiving control instructions (e.g., from the control system 130). The actuator authority is based on an inertia of a beam 320 and any components coupled to the beam 320.

The control system 130 (not shown in FIGS. 3A-3C) uses the actuator system 315 and data from the sensors 325 to adjust the position of each beam 320. For example, the control system 130 executes a control algorithm and transmits actuator control instructions to the actuator system 315. Note that adjusting the position of a beam may be considered a farming action.

Thus, the heights can be dynamically and proactively adjusted as the farming machine 300 moves through the field. For example, a beam 320 is raised to reduce the risk of the beam 320 (or a component coupled to the beam) striking an object in the field or striking the ground (e.g., if the ground height rapidly changes). Adjusting the beam position may provide other advantages as well. For example, a beam position is adjusted so that a treatment mechanism mounted to the beam 320 is at a desired height to perform farming operations, even if the ground under the farming machine 300 changes.

In FIG. 3A, the ground is relatively flat. Thus, the beams 320 are perpendicular to the body 310 and in a horizontal position. In FIG. 3B, the field includes obstacles 340 on the left and right sides of the farming machine 300. As the farming machine 300 moves toward the obstacles 340, they may be detected (e.g., using data from sensors 325A and 325B). In response, the actuator system 315 raises each beam 320 (as indicated by the dashed arrows) to prevent the beams 320 from striking the obstacles 340. The control system 130 may control each beam 320 independently. For example, as illustrated in FIG. 3B, the actuator system 315 raises beam 320A higher than beam 320B since obstacle 340A is taller than obstacle 340B.

In FIG. 3C, the right locomoting mechanism 330 (e.g., wheel) is in a ditch 345. Thus, the farming machine 300 is tilted to the right as it moves through the field along the ditch 345. Before the farming machine 300 moves into the ditch 345, the control system 130 may detect the ditch 345 (e.g., using data from sensor 325C) and determine that the farming machine 300 will tilt. In response, the actuator system 315 raises beam 320B and lowers beam 320A, as indicated by the dashed arrows. This prevents beam 320B from striking the ground and allows beam 320A to maintain a target beam height above the ground (e.g., so that a treatment mechanism can continue to perform farming actions in the field). If the farming machine includes an IMU sensor or potentiometer sensor, the control system 130 may also detect the body tilting and adjust the beams accordingly (e.g., if the control system 130 didn't detect the ditch 345 using data from sensor 325C).

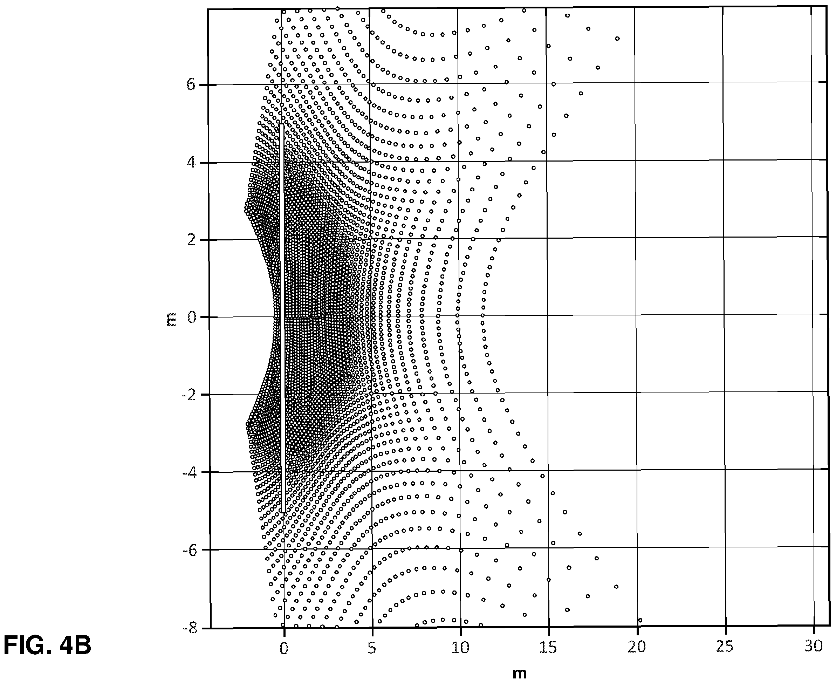

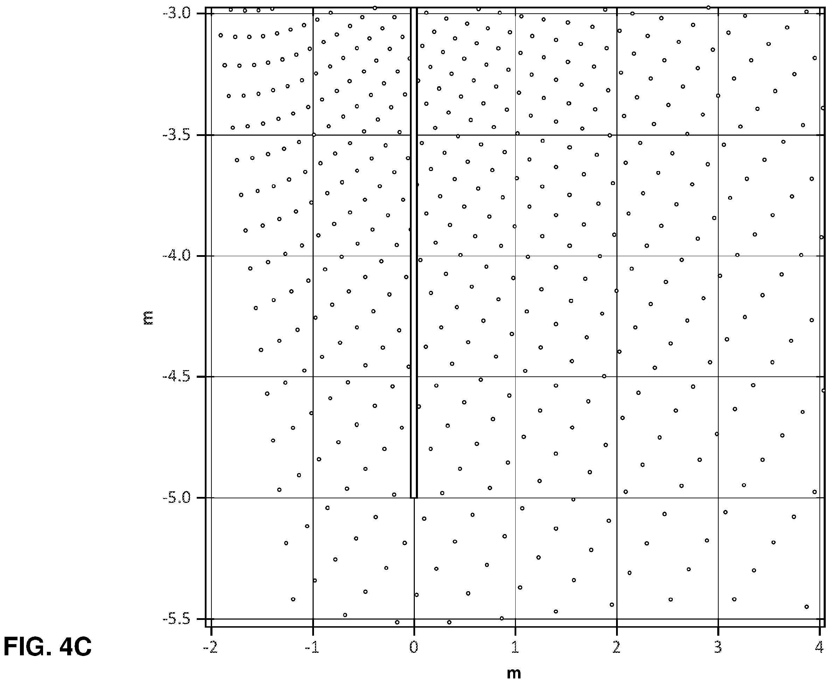

FIG. 4A illustrates a cross-sectional view of sensor 325A and beam 320A from the farming machine 300, according to an embodiment. In this example, sensor 325A is coupled to the top of beam 320 and is oriented along a forward and downward direction. The sensor 325A may be coupled to other portions of the beam 320A, such as the bottom. FIG. 4A also illustrates ground points 410A-410F. As described above, sensor 325A generates data indicative of angles and distances 420 to a set of ground points. Said differently, sensor 325A samples the terrain profile of the field at the ground points. Because the sensor 325A is facing forward, the ground points 410 are in front of the beam 320A along the direction of travel 115. Sensor data may be generated for additional or fewer ground points 410 than those illustrated. For example, FIG. 4A illustrates six ground points. However, in other embodiments, the sensor data may be generated for more ground points, such as 10, 15, or 20. Generating measurement data for a plurality of ground points (e.g., instead of just one ground point) may provide a greater understanding of the variability of the terrain. In some embodiments, sensor 325A generates data for ground points in front of other portions of beam 320A (e.g., along an axis perpendicular to the direction of travel 115). For example, see FIGS. 4B and 4C. In some embodiments, ground points 410 are in front of the beam along the entire portion of the beam. The sensing area may also be larger or smaller than illustrated. For example, sensor 325A may generate data for ground points directly below the sensor 325A.

The distances 420 are determined by analyzing the measurement data (e.g., extracting distances from an image or a pair of images). This analysis may be performed by the sensor 325A or the control system 130. For brevity, the remaining description assumes the sensor 325A determines the distances 420. If sensor 325A is a LIDAR sensor, it may determine a distance 420 by targeting a ground point 410 with a laser and measuring the time for the reflected light to return to the sensor 325A. In another example, the sensor 325A includes one or more image sensors and analyzes the captured images to determine a distance 420.

Depending on the sensor type and orientation, the sensor data may indicate distances 420 for ground points 410 that are zero to five or ten (or more) meters in front of the sensor 325A. In some embodiments, one or more ground points 410 are at least half a meter in front of the sensor 325A, however this threshold distance may depend on the speed of the farming machine 300, the latency of the control system 130, and the authority of the actuator system 315. Determining distances 420 for ground points 410 equal to or beyond this threshold distance allows the beam 320A to be proactively positioned to avoid obstacles and striking the ground. If all the ground points are less than this threshold distance, the control system 130 or actuator system 315 may not have enough time to safely position the beam 320A. For example, if sensors of a farming machine are oriented directly downward (e.g., they only capture distances for ground points directly below the beam), then the system may not have enough time to react (e.g., if the ground height rises or if the field includes an obstacle).

FIGS. 4B-4C illustrate a sample ground point pattern for a sensor 325 (e.g., a LIDAR sensor), in accordance with one or more example embodiments. The plot represents a ground point pattern for a sensor 325 at a height of two meters above the ground. The sensor has a +/-45 degree vertical field of view and a +/-80 degree horizontal field of view. The sensor is tilted downwards at 55 degrees.

Each data point represents a ground point as seen from a top view (e.g., the xz plane in the coordinate system of FIG. 4A). The vertical line ranging from point (0, 5) to (0, -5) represents the location of a beam 320 (e.g., beam 320A). The x- and y-axes of the plot represent the distance (in meters) from the sensor location (the sensor is located at point (0,0)). The density of the data points is highest around point (0,0) and decreases with distance away from point (0,0). FIG. 4C is a zoomed in plot of FIG. 4B and illustrates details near a tip of the beam. As demonstrated by FIGS. 4B-4C, a sensor 325 can create measurement data for ground points in an area in front of and behind the beam 325 (e.g., depending on the location, orientation, and field of view of the sensor).

The control system 130 may use the distance and angle data to determine what the height of the beam 320A will be when it passes over the ground points 410 (assuming the beam position or beam height doesn't change). If the beam 320A will be below a threshold height value for a given ground point (e.g., point 410F), the control system 130 may adjust (via the actuator system 315) the position of the beam 320A so that the beam will be above the threshold value when the beam passes over the ground point (e.g., point 410F).

In some embodiments, the control system 130 determines target heights for the ground points 410. A target height indicates where the beam 320A should be located (e.g., within an error threshold) when the beam (or another component) passes over the corresponding ground point (e.g., to avoid a ground strike). Each target height is associated with a ground point 410. The control system 130 may determine a target height 510 for each ground point 410.

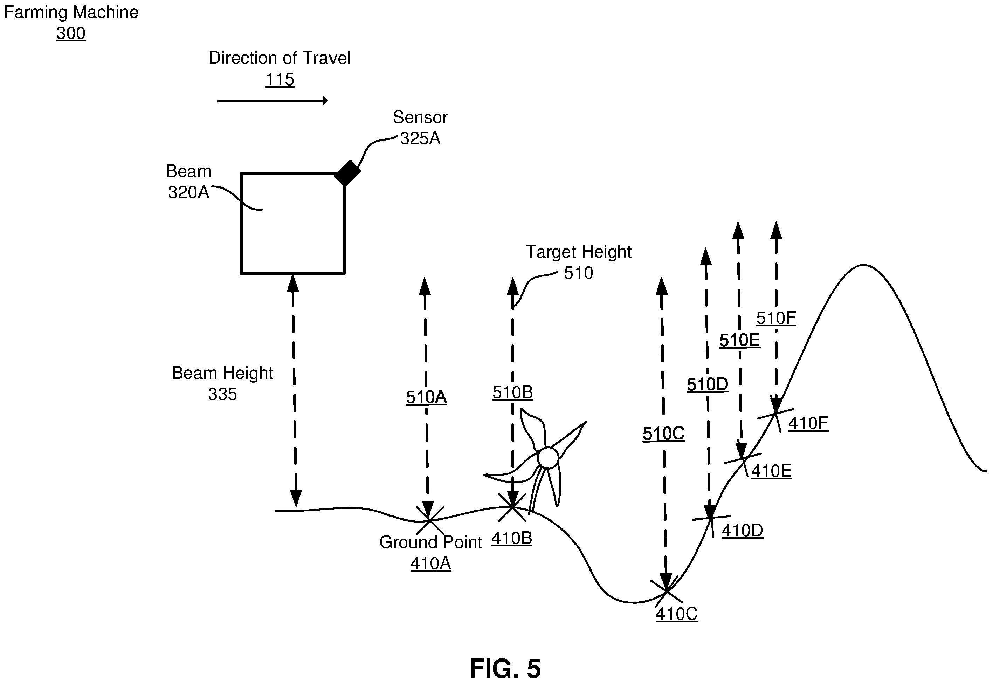

FIG. 5 illustrates example target heights 510A-510F that respectively correspond to the ground points 410A-410F in FIG. 4A. Target heights 510A and 510B are similar to the current beam height 335. Thus, the beam position relative to the body 310 may stay constant as the beam 320 passes over ground points 410A and 410B (e.g., assuming the ground below the locomoting mechanism 330 is flat). To avoid a ground strike, target heights 510C-510F, may result in the actuator system 315 raising beam 320A before it passes over ground points 410C-410F.

A target height 510 may be determined based on the measurement data, a height variability of the ground (e.g., a value that indicates how frequently or intensely the height of the ground changes), the sensing distance of the sensor 325A (e.g., the range of the sensor 325A), the speed of the farming machine 300, the authority of the actuator system 315, the crop growing in the field, the height of the crop growing in the field, or a type of treatment mechanism 120 coupled to beam 320A. For example, a target height 510 may be determined so that a treatment mechanism 120 can perform farming actions on specific portions (e.g., top portions) of plants growing in the field. In another example, the control system 130 determines target heights 510 that are possible given the sensing distance, the speed of the farming machine, and the authority of the actuator system 315. If the farming machine is moving quickly, the actuator system 315 may not be capable of making a large change to the beam position before a ground point is passed over. In this case, the control system 130 may determine target heights that correspond to small beam position changes.

The control system 130 may actuate the actuator system 315 based on the measurement data and a target height 510 so that the beam 320A has a height 335 equal to a target height 510 before it passes over the corresponding ground point. Practically, it may be difficult for the beam height 335 to be exactly equal to the target height 510. Thus, the target height 510 may be a lower bound (e.g., the beam height 335 is equal to or greater than the target height 510) or the beam height 335 may be equal to the target height 510 within an error value (e.g., 10%) (the error value may be referred to as a distance threshold).

In some embodiments, the control system 130 actuates the actuator system 315 so that beam 320A has a height 335 equal to each target height 510 before another component of the farming machine passes over the corresponding ground points 410. For example, referring to FIG. 3C, the control system 130 may adjust the beam position prior to the locomoting mechanism 330 or the body 310 passing over a ground point in ditch 345.

To reach a target height 510, the control system 130 may actuate the actuator system 315 as soon as possible. If multiple target heights 510 are in a queue, the control system 130 may begin adjusting beam 320A to the next target height 510 as soon as the beam 320A passes over a current ground point 410. The control system 130 may also account for the authority of the actuator system 130 and the speed of the farming machine. For example, for a given speed, the control system 130 may begin adjusting a beam position so that the actuator system 315 has enough time to adjust the beam to the target height 510 before the beam passes over the corresponding ground point 410. In some embodiments, the control system 130 accounts for other possible limitations, such as actuator non-linearities, transmission delays between the control system 130 and the actuator system 315, machine modeling errors, physical stresses on the beam 320 and components coupled to the beam, and excitation of possible unmodelled flexibility modes.

In some cases, the ground height may change rapidly (e.g., due to rough terrain or the farming machine is moving quickly). In these cases, the control system 130 may not be able to prevent ground strikes. Thus, the control system 130 may raise one or more of the beams 320 to a safety position that likely avoids ground strikes (e.g., the highest position). For example, if the height variability of the ground exceeds a threshold variability value, the control system 130 raises a beam 320 to the safety position. The control system 130 may do this even if the position renders treatment mechanisms 120 on the beams 320 unable to perform farming actions. Additionally, or alternatively, the control system 130 may slow down the farming machine 300 or send instructions for display to a manager to slow down the farming machine 300.

In some embodiments, the control system 130 uses a model predictive control (MPC) method to provide control instructions to the actuator system. The system model may be developed by dynamic analysis, from first principles, system identification, or machine learning. With MPC, at each step out to a prediction horizon (e.g., N time steps into the future), the control system 130 may solve a nonlinear optimization problem (NLP) with equality and inequality constraints. The solution to this optimization problem may provide a sequence of control actions (e.g., instructions) that are consistent with the capabilities of the actuator system 315 and which consider disturbances due to the terrain in the field. The NLP may be solved repeatedly at each subsequent step. This MPC method may allow the control system 130 to respond quickly and appropriately as new terrain comes into view. In alternate embodiments, the control system 130 may use a LQR (linear-quadratic regulator) to weigh a set of sampled terrain measurements (e.g., a set of measurement data).

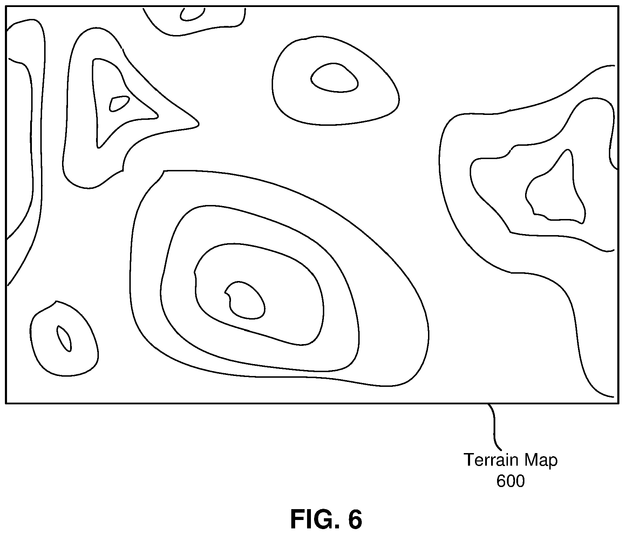

In some embodiments, the control system 130 generates a terrain map of the field based on the generated distance and angle data and GNSS position coordinates. A terrain map indicates changes in ground height in the field. Generating the terrain map may include converting the coordinate frame of the distance and angle data to the coordinate frame of the field. FIG. 6 illustrates an example terrain map 600. In this case, the terrain map 600 is a contour map, however other types of maps may be generated. If a terrain map was previously generated, the control system 130 may use the terrain map as the farming machine moves through the field. The control system 130 adjusts the position of the beam based on a terrain map. Additionally, the control system 130 may generate a crop height map that indicates the heights of plants growing in the field. A crop height may be generated using distance and angle data that indicates heights of plants in the field.

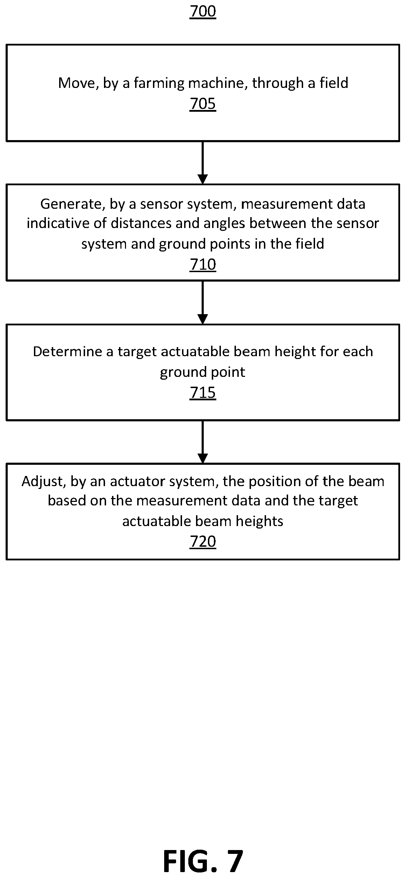

FIG. 7 illustrates a method 700 for adjusting a beam of a farming machine moving through a field. One or more steps of the method 700 may be performed by the control system 130. The method 700 can include additional steps than described herein. Additionally, the steps can be performed in different order, or by different components than described herein.

A farming machine moves 705 through a field. The farming machine includes an actuatable beam (e.g., a mounting mechanism 140) extending away from a body of the farming machine and an actuator system configured to control a position of the actuatable beam relative to the body of the farming machine. A sensor system generates 710 measurement data indicating distances and angles between the sensor system and ground points in the field. The ground points are at least a threshold distance in front of a component of the farming machine (e.g., the beam or a locomoting mechanism). The control system determines 715 a target actuatable beam height for each ground point. The control system adjusts 720, via the actuator system, the position of the actuatable beam based on the measurement data and the target actuatable beam heights as the farming machine moves toward the ground points. A height of the actuatable beam relative to the ground is within a second threshold distance of a target actuatable beam height corresponding to each ground point prior to the component passing over each ground point.

### VI. CONTROL SYSTEM

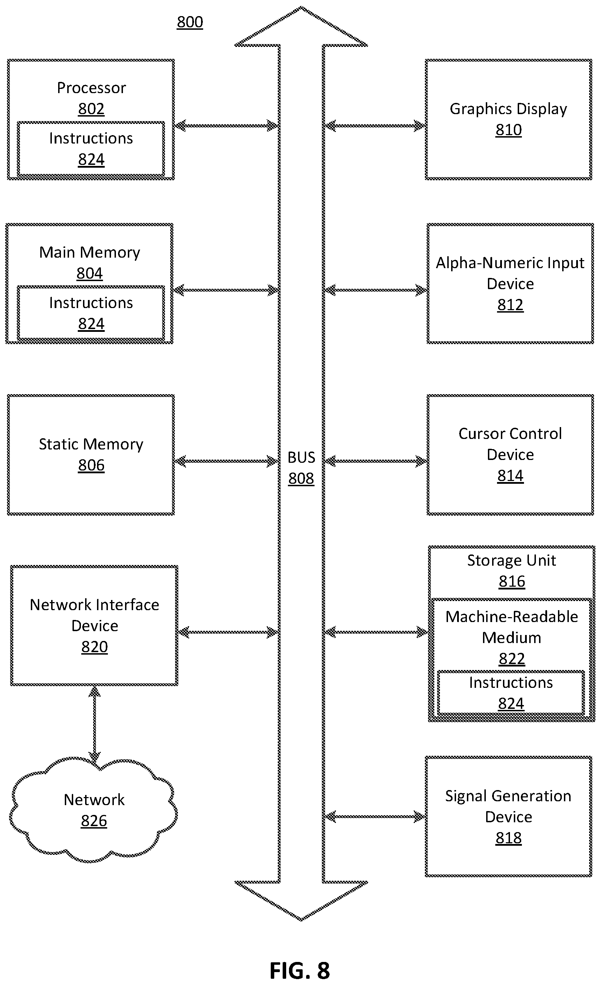

FIG. 8 is a block diagram illustrating components of an example machine for reading and executing instructions from a machine-readable medium, in accordance with one or more example embodiments. Specifically, FIG. 8 shows an example diagrammatic representation of the server system 440 in the example form of a computer system 800. FIG. 8 may be applicable to the control system 130. The computer system 800 can be used to execute instructions 824 (e.g., program code or software) for causing the machine to perform any one or more of the methodologies (or processes) described herein. In alternative embodiments, the machine operates as a standalone device or a connected (e.g., networked) device that connects to other machines. In a networked deployment, the machine may operate in the capacity of a server machine or a client machine in a client-server network environment, or as a peer machine in a peer-to-peer (or distributed) network environment.

The machine may be a server computer, a client computer, a personal computer (PC), a tablet PC, a set-top box (STB), a smartphone, an internet of things (IoT) appliance, a network router, switch or bridge, or any machine capable of executing instructions 824 (sequential or otherwise) that specify actions to be taken by that machine. Further, while only a single machine is illustrated, the term "machine" shall also be taken to include any collection of machines that individually or jointly execute instructions 824 to perform any one or more of the methodologies discussed herein.

The example computer system 800 includes one or more processing units (generally processor 802). The processor 802 is, for example, a central processing unit (CPU), a graphics processing unit (GPU), a digital signal processor (DSP), a control system, a state machine, one or more application specific integrated circuits (ASICs), one or more radio-frequency integrated circuits (RFICs), or any combination of these. The computer system 800 also includes a main memory 804. The computer system may include a storage unit 816. The processor 802, memory 804, and the storage unit 816 communicate via a bus 808.

In addition, the computer system 800 can include a static memory 806, a graphics display 810 (e.g., to drive a plasma display panel (PDP), a liquid crystal display (LCD), or a projector). The computer system 800 may also include an alphanumeric input device 812 (e.g., a keyboard), a cursor control device 88 (e.g., a mouse, a trackball, a joystick, a motion sensor, or other pointing instrument), a signal generation device 818 (e.g., a speaker), and a network interface device 820, which also are configured to communicate via the bus 808.

The storage unit 816 includes a machine-readable medium 822 on which is stored instructions 824 (e.g., software) embodying any one or more of the methodologies or functions described herein. The instructions 824 may also reside, completely or at least partially, within the main memory 804 or within the processor 802 (e.g., within a processor's cache memory) during execution thereof by the computer system 800, the main memory 804 and the processor 802 also constituting machine-readable media. The instructions 824 may be transmitted or received over a network 826 via the network interface device 820.

### VII. ADDITIONAL CONSIDERATIONS

In the description above, for purposes of explanation, numerous specific details are set forth in order to provide a thorough understanding of the illustrated system and its operations. It will be apparent, however, to one skilled in the art that the system can be operated without these specific details. In other instances, structures and devices are shown in block diagram form in order to avoid obscuring the system.

Reference in the specification to "one embodiment" or "an embodiment" means that a particular feature, structure, or characteristic described in connection with the embodiment is included in at least one embodiment of the system. The appearances of the phrase "in one embodiment" in various places in the specification are not necessarily all referring to the same embodiment.

Some portions of the detailed descriptions are presented in terms of algorithms or models and symbolic representations of operations on data bits within a computer memory. An algorithm is here, and generally, conceived to be steps leading to a desired result. The steps are those requiring physical transformations or manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Some of the operations described herein are performed by a computer (e.g., physically mounted within a machine 100). This computer may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of non-transitory computer readable storage medium suitable for storing electronic instructions.

The figures and the description above relate to various embodiments by way of illustration only. It should be noted that from the following discussion, alternative embodiments of the structures and methods disclosed herein will be readily recognized as viable alternatives that may be employed without departing from the principles of what is claimed.

One or more embodiments have been described above, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct physical or electrical contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article or apparatus that comprises a list of elements is not necessarily limited to only those elements but may include other elements not expressly listed or inherent to such process, method, article or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B is true (or present).

In addition, use of "a" or "an" are employed to describe elements and components of the embodiments herein. This is done merely for convenience and to give a general sense of the system. This description should be read to include one or at least one and the singular also includes the plural unless it is obvious that it is meant otherwise.

Upon reading this disclosure, those of skill in the art will appreciate still additional alternative structural and functional designs. Thus, while particular embodiments and applications have been illustrated and described, it is to be understood that the disclosed embodiments are not limited to the precise construction and components disclosed herein.

## Claims

1. A farming machine (300) configured to move through a field, the farming machine (300) comprising:
an actuatable beam (320A, 320B) extending away from a body (310) of the farming machine (300);
an actuator system (315) configured to control a position of the actuatable beam (320A, 320B) relative to the body (310) of the farming machine (300);
a sensor system (325A, 325B) configured to generate measurement data indicative of distances and angles between the sensor system (325A, 325B) and ground points in the field at least a first threshold distance in front of a component of the farming machine (300); and
a control system (130) configured to:
receive the measurement data from the sensor system (325A, 325B);
generate a terrain map of the ground around the farming machine (300) based on the measurement data from the sensor system (325A, 325B);
determine a target actuatable beam height for each ground point at the first threshold distance in front of the component of the farming machine (300) based on the terrain map; and
actuate the actuator system (315) to adjust the position of the actuatable beam (320A, 320B) based on the measurement data and the target actuatable beam heights as the farming machine (300) moves toward the ground points, wherein a height of the actuatable beam (320A, 320B) relative to the field is within a second threshold distance of the target actuatable beam height corresponding to each ground point prior to the component passing over each ground point.

2. The farming machine (300) of claim 1, wherein the first threshold distance is at least 0.5 meters in front of the component.

3. The farming machine (300) of claim 1, wherein the sensor system (325A, 325B) is oriented along a forward direction and a downward direction.

4. The farming machine (300) of claim 1, wherein the control system (130) is configured to:
i) determine a target actuatable beam height based on a sensing distance of the sensor system (325A, 325B), a speed of the farming machine (300) moving through the field, and an actuator authority of the actuator system (315); or
ii) determine a target actuatable beam height based on at least one of: a crop in the field, a height of the crop in the field, a treatment mechanism coupled to the actuatable beam (320A, 320B), or a height variability of the ground; or
iii) responsive to a height variability of the ground exceeding a threshold variability value, raise the actuatable beam (320A, 320B) to a predetermined safety position.

5. The farming machine (300) of claim 1, wherein sensor system (325A, 325B) is further configured to generate measurement data indicative of a height of a crop in the field.

6. The farming machine (300) of claim 1, wherein the component is the actuatable beam (320A, 320B) or a locomoting mechanism of the farming machine (300).

7. The farming machine (300) of claim 1, wherein the sensor system (325A, 325B) is coupled to the actuatable beam (320A, 320B) or the body (310) of the farming machine (300).

8. The farming machine (300) of claim 1, wherein the sensor system (325A, 325B) includes a LIDAR (light detection and ranging) sensor, an IMU (inertial measurement unit) sensor or a potentiometer sensor.

9. A method comprising:
moving, by a farming machine (300), through a field, the farming machine (300) including an actuatable beam (320A, 320B) extending away from a body (310) of the farming machine (300) and an actuator system (315) configured to control a position of the actuatable beam (320A, 320B) relative to the body (310) of the farming machine (300);
generating, by a sensor system (325A, 325B), measurement data indicative of distances and angles between the sensor system (325A, 325B) and ground points in the field at least a threshold distance in front of a component of the farming machine (300);
generating a terrain map of the ground around the farming machine (300) based on the measurement data from the sensor system (325A, 325B);
determining a target actuatable beam height for each ground point at the first threshold distance in front of the component of the farming machine (300) based on the terrain map; and
adjusting, by the actuator system (315), the position of the actuatable beam (320A, 320B) based on the measurement data and the target actuatable beam heights as the farming machine (300) moves toward the ground points, wherein a height of the actuatable beam (320A, 320B) relative to the field is within a second threshold distance of the target actuatable beam height corresponding to each ground point prior to the component passing over each ground point.

10. The method of claim 9, wherein the threshold distance is at least 0.5 meters in front of the actuatable beam (320A, 320B).

11. The method of claim 9, wherein the sensor system (325A, 325B) is oriented along a forward direction and a downward direction.

12. The method of claim 9, wherein a target actuatable beam height is determined based on:
i) a sensing distance of the sensor system (325A, 325B), a speed of the farming machine (300) moving through the field, and an actuator authority of the actuator system (315); or
ii) at least one of: a crop in the field, a height of the crop in the field, a treatment mechanism coupled to the actuatable beam (320A, 320B), or a height variability of the ground.

13. The method of claim 9, further comprising:
generating, by the sensor system (325A, 325B), measurement data indicative of a height of a crop in the field; or
responsive to a height variability of the ground exceeding a threshold variability value, raising the actuatable beam (320A, 320B) above a predetermined safety position.

14. The method of claim 9, wherein the component is the actuatable beam (320A, 320B) or a locomoting mechanism of the farming machine (300).

15. A non-transitory computer-readable storage medium comprising stored instructions that, when executed by a computing system, cause a farming machine according to claim 1 to perform operations including:
moving, by the farming machine (300), through a field, the farming machine (300) including an actuatable beam (320A, 320B) extending away from a body (310) of the farming machine (300) and an actuator system (315) configured to control a position of the actuatable beam (320A, 320B) relative to the body (310) of the farming machine (300);
generating, by a sensor system (325A, 325B), measurement data indicative of distances and angles between the sensor system (325A, 325B) and ground points in the field at least a threshold distance in front of a component of the farming machine (300);
generating a terrain map of the ground around the farming machine (300) based on the measurement data from the sensor system;
determining a target actuatable beam height for each ground point at the first threshold distance in front of the component of the farming machine (300) based on the terrain map; and
adjusting, by the actuator system (315), the position of the actuatable beam (320A, 320B) based on the measurement data and the target actuatable beam heights as the farming machine (300) moves toward the ground points, wherein a height of the actuatable beam (320A, 320B) relative to the field is within a second threshold distance of the target actuatable beam height corresponding to each ground point prior to the component passing over each ground point.

## Patentansprüche

1. Landwirtschaftliche Maschine (300), die dazu konfiguriert ist, sich über ein Feld zu bewegen, wobei die landwirtschaftliche Maschine (300) Folgendes umfasst:
einen betätigbaren Balken (320A, 320B), der sich von einem Körper (310) der landwirtschaftlichen Maschine (300) weg erstreckt;
ein Aktorsystem (315), das dazu konfiguriert ist, eine Position des betätigbaren Balkens (320A, 320B) bezogen auf den Körper (310) der landwirtschaftlichen Maschine (300) zu steuern;
ein Sensorsystem (325A, 325B), das dazu konfiguriert ist, Messdaten zu generieren, die auf Entfernungen und Winkel zwischen dem Sensorsystem (325A, 325B) und Bodenpunkten auf dem Feld hinweisen, die sich mindestens in einer ersten Schwellenentfernung vor einer Komponente der landwirtschaftlichen Maschine (300) befinden; und
ein Steuersystem (130), das zu Folgendem konfiguriert ist:
Empfangen der Messdaten von dem Sensorsystem (325A, 325B);
Generieren einer Geländekarte des Bodens um die landwirtschaftliche Maschine (300) auf Grundlage der Messdaten des Sensorsystems (325A, 325B);
Bestimmen einer Zielhöhe des betätigbaren Balkens für jeden Bodenpunkt in der ersten Schwellenentfernung vor der Komponente der landwirtschaftlichen Maschine (300) auf Grundlage der Geländekarte; und
Betätigen des Aktorsystems (315), um die Position des betätigbaren Balkens (320A, 320B) auf Grundlage der Messdaten und der Zielhöhen des betätigbaren Balkens einzustellen, während sich die landwirtschaftliche Maschine (300) in Richtung der Bodenpunkte bewegt, wobei eine Höhe des betätigbaren Balkens (320A, 320B) bezogen auf das Feld innerhalb einer zweiten Schwellenentfernung der Zielhöhe des betätigbaren Balkens liegt, die jedem Bodenpunkt entspricht, bevor die Komponente jeden Bodenpunkt passiert.

2. Landwirtschaftliche Maschine (300) nach Anspruch 1, wobei die erste Schwellenentfernung mindestens 0,5 Meter vor der Komponente beträgt.

3. Landwirtschaftliche Maschine (300) nach Anspruch 1, wobei das Sensorsystem (325A, 325B) entlang einer Vorwärtsrichtung und einer Abwärtsrichtung ausgerichtet ist.

4. Landwirtschaftliche Maschine (300) nach Anspruch 1, wobei das Steuersystem (130) zu Folgendem konfiguriert ist:
i) Bestimmen einer Zielhöhe des betätigbaren Balkens auf Grundlage einer Erfassungsentfernung des Sensorsystems (325A, 325B), einer Geschwindigkeit der sich über das Feld bewegenden landwirtschaftlichen Maschine (300) und einer Aktorautorität des Aktorsystems (315); oder
ii) Bestimmen einer Zielhöhe des betätigbaren Balkens auf Grundlage von mindestens einem von Folgendem: einer Pflanze auf dem Feld, einer Höhe der Pflanze auf dem Feld, einem an den betätigbaren Balken (320A, 320B) gekoppelten Behandlungsmechanismus oder einer Höhenvariabilität des Bodens; oder
iii) Anheben des betätigbaren Balkens (320A, 320B) in eine vorbestimmte Sicherheitsposition als Reaktion darauf, dass eine Höhenvariabilität des Bodens einen Schwellenvariabilitätswert überschreitet.

5. Landwirtschaftliche Maschine (300) nach Anspruch 1, wobei das Sensorsystem (325A, 325B) ferner dazu konfiguriert ist, Messdaten zu generieren, die auf eine Höhe einer Pflanze auf dem Feld hinweisen.

6. Landwirtschaftliche Maschine (300) nach Anspruch 1, wobei die Komponente der betätigbare Balken (320A, 320B) oder ein Fortbewegungsmechanismus der landwirtschaftlichen Maschine (300) ist.

7. Landwirtschaftliche Maschine (300) nach Anspruch 1, wobei das Sensorsystem (325A, 325B) an den betätigbaren Balken (320A, 320B) oder den Körper (310) der landwirtschaftlichen Maschine (300) gekoppelt ist.

8. Landwirtschaftliche Maschine (300) nach Anspruch 1, wobei das Sensorsystem (325A, 325B) einen LIDAR-(Light-Detection-and-Ranging-)Sensor, einen IMU-(Inertial-Measurement-Unit-)Sensor oder einen Potentiometersensor beinhaltet.

9. Verfahren, umfassend:
Bewegen einer landwirtschaftlichen Maschine (300) über ein Feld, wobei die landwirtschaftliche Maschine (300) einen betätigbaren Balken (320A, 320B), der sich von einem Körper (310) der landwirtschaftlichen Maschine (300) weg erstreckt, und ein Aktorsystem (315) beinhaltet, das dazu konfiguriert ist, eine Position des betätigbaren Balkens (320A, 320B) bezogen auf den Körper (310) der landwirtschaftlichen Maschine (300) zu steuern;
Generieren von Messdaten, die auf Entfernungen und Winkel zwischen dem Sensorsystem (325A, 325B) und Bodenpunkten auf dem Feld hinweisen, die sich mindestens in einer ersten Schwellenentfernung vor einer Komponente der landwirtschaftlichen Maschine (300) befinden, durch ein Sensorsystem (325A, 325B);
Generieren einer Geländekarte des Bodens um die landwirtschaftliche Maschine (300) auf Grundlage der Messdaten des Sensorsystems (325A, 325B);
Bestimmen einer Zielhöhe des betätigbaren Balkens für jeden Bodenpunkt in der ersten Schwellenentfernung vor der Komponente der landwirtschaftlichen Maschine (300) auf Grundlage der Geländekarte; und
Einstellen der Position des betätigbaren Balkens (320A, 320B) auf Grundlage der Messdaten und der Zielhöhen des betätigbaren Balkens durch das Aktorsystem (315), während sich die landwirtschaftliche Maschine (300) in Richtung der Bodenpunkte bewegt, wobei eine Höhe des betätigbaren Balkens (320A, 320B) bezogen auf das Feld innerhalb einer zweiten Schwellenentfernung der Zielhöhe des betätigbaren Balkens liegt, die jedem Bodenpunkt entspricht, bevor die Komponente jeden Bodenpunkt passiert.

10. Verfahren nach Anspruch 9, wobei die Schwellenentfernung mindestens 0,5 Meter vor dem betätigbaren Balken (320A, 320B) beträgt.

11. Verfahren nach Anspruch 9, wobei das Sensorsystem (325A, 325B) entlang einer Vorwärtsrichtung und einer Abwärtsrichtung ausgerichtet ist.

12. Verfahren nach Anspruch 9, wobei eine Zielhöhe des betätigbaren Balkens auf Grundlage von Folgendem bestimmt wird:
i) einer Erfassungsentfernung des Sensorsystems (325A, 325B), einer Geschwindigkeit der sich über das Feld bewegenden landwirtschaftlichen Maschine (300) und einer Aktorautorität des Aktorsystems (315); oder
ii) mindestens einem von Folgendem: einer Pflanze auf dem Feld, einer Höhe der Pflanze auf dem Feld, einem an den betätigbaren Balken (320A, 320B) gekoppelten Behandlungsmechanismus oder einer Höhenvariabilität des Bodens.

13. Verfahren nach Anspruch 9, ferner umfassend:
Generieren von Messdaten, die auf eine Höhe einer Pflanze auf dem Feld hinweisen, durch das Sensorsystem (325A, 325B); oder
Anheben des betätigbaren Balkens (320A, 320B) über eine vorbestimmte Sicherheitsposition als Reaktion auf eine Höhenvariabilität des Bodens, die einen Schwellenvariabilitätswert überschreitet.

14. Verfahren nach Anspruch 9, wobei die Komponente der betätigbare Balken (320A, 320B) oder ein Fortbewegungsmechanismus der landwirtschaftlichen Maschine (300) ist.

15. Nicht flüchtiges, computerlesbares Speichermedium, das gespeicherte Anweisungen umfasst, die bei Ausführung durch ein Rechensystem eine landwirtschaftliche Maschine gemäß Anspruch 1 dazu veranlassen, Vorgänge durchzuführen, die Folgendes beinhalten:
Bewegen der landwirtschaftlichen Maschine (300) über ein Feld, wobei die landwirtschaftliche Maschine (300) einen betätigbaren Balken (320A, 320B), der sich von einem Körper (310) der landwirtschaftlichen Maschine (300) weg erstreckt, und ein Aktorsystem (315) beinhaltet, das dazu konfiguriert ist, eine Position des betätigbaren Balkens (320A, 320B) bezogen auf den Körper (310) der landwirtschaftlichen Maschine (300) zu steuern;
Generieren von Messdaten, die auf Entfernungen und Winkel zwischen dem Sensorsystem (325A, 325B) und Bodenpunkten auf dem Feld hinweisen, die sich mindestens in einer ersten Schwellenentfernung vor einer Komponente der landwirtschaftlichen Maschine (300) befinden, durch ein Sensorsystem (325A, 325B);
Generieren einer Geländekarte des Bodens um die landwirtschaftliche Maschine (300) auf Grundlage der Messdaten des Sensorsystems;
Bestimmen einer Zielhöhe des betätigbaren Balkens für jeden Bodenpunkt in der ersten Schwellenentfernung vor der Komponente der landwirtschaftlichen Maschine (300) auf Grundlage der Geländekarte; und
Einstellen der Position des betätigbaren Balkens (320A, 320B) auf Grundlage der Messdaten und der Zielhöhen des betätigbaren Balkens durch das Aktorsystem (315), während sich die landwirtschaftliche Maschine (300) in Richtung der Bodenpunkte bewegt, wobei eine Höhe des betätigbaren Balkens (320A, 320B) bezogen auf das Feld innerhalb einer zweiten Schwellenentfernung der Zielhöhe des betätigbaren Balkens liegt, die jedem Bodenpunkt entspricht, bevor die Komponente jeden Bodenpunkt passiert.

## Revendications

1. Machine agricole (300) conçue pour se déplacer dans un champ, la machine agricole (300) comprenant :
une poutre actionnable (320A, 320B) s'étendant en éloignement d'un corps (310) de la machine agricole (300) ;
un système d'actionneur (315) conçu pour commander une position de la poutre actionnable (320A, 320B) par rapport au corps (310) de la machine agricole (300) ;
un système de capteur (325A, 325B) conçu pour générer des données de mesure indicatives des distances et des angles entre le système de capteur (325A, 325B) et des points au sol dans le champ au moins une première distance seuil devant un composant de la machine agricole (300) ; et
un système de commande (130) conçu pour :
recevoir les données de mesure en provenance du système de capteur (325A, 325B) ;
générer une carte de terrain du sol autour de la machine agricole (300) sur la base des données de mesure provenant du système de capteur (325A, 325B) ;
déterminer une hauteur de poutre actionnable cible pour chaque point au sol à la première distance seuil devant le composant de la machine agricole (300) sur la base de la carte de terrain ; et
actionner le système d'actionneur (315) pour ajuster la position de la poutre actionnable (320A, 320B) sur la base des données de mesure et des hauteurs de poutre actionnable cible lorsque la machine agricole (300) se déplace vers les points au sol, dans laquelle une hauteur de la poutre actionnable (320A, 320B) par rapport au champ se situe à une seconde distance seuil de la hauteur de poutre actionnable cible correspondant à chaque point au sol avant le passage du composant au-dessus de chaque point au sol.

2. Machine agricole (300) selon la revendication 1, dans laquelle la première distance seuil est d'au moins 0,5 mètre devant le composant.

3. Machine agricole (300) selon la revendication 1, dans laquelle le système de capteur (325A, 325B) est orienté dans une direction vers l'avant et une direction vers le bas.

4. Machine agricole (300) selon la revendication 1, dans laquelle le système de commande (130) est conçu pour :
i) déterminer une hauteur de poutre actionnable cible sur la base d'une distance de détection du système de capteur (325A, 325B), d'une vitesse de la machine agricole (300) se déplaçant dans le champ et d'une autorité d'actionneur du système d'actionneur (315) ; ou
ii) déterminer une hauteur de poutre actionnable cible sur la base d'au moins un parmi : une culture dans le champ, une hauteur de la culture dans le champ, un mécanisme de traitement couplé à la poutre actionnable (320A, 320B) ou une variabilité de hauteur du sol ; ou
iii) en réponse au fait qu'une variabilité de hauteur du sol dépasse une valeur de variabilité seuil, élever la poutre actionnable (320A, 320B) à une position de sécurité prédéterminée.

5. Machine agricole (300) selon la revendication 1, dans laquelle le système de capteur (325A, 325B) est en outre configuré pour générer des données de mesure indicatives d'une hauteur d'une culture dans le champ.

6. Machine agricole (300) selon la revendication 1, dans laquelle le composant est la poutre actionnable (320A, 320B) ou un mécanisme de locomotion de la machine agricole (300).

7. Machine agricole (300) selon la revendication 1, dans laquelle le système de capteur (325A, 325B) est couplé à la poutre actionnable (320A, 320B) ou au corps (310) de la machine agricole (300).

8. Machine agricole (300) selon la revendication 1, dans laquelle le système de capteur (325A, 325B) comprend un capteur LIDAR (détection et télémétrie de lumière), un capteur IMU (unité de mesure inertielle) ou un capteur de potentiomètre.

9. Procédé comprenant :
le déplacement, par une machine agricole (300), dans un champ, la machine agricole (300) comprenant une poutre actionnable (320A, 320B) s'étendant en éloignement d'un corps (310) de la machine agricole (300) et un système d'actionneur (315) conçu pour commander une position de la poutre actionnable (320A, 320B) par rapport au corps (310) de la machine agricole (300) ;
la génération, par un système de capteur (325A, 325B), de données de mesure indicatives des distances et des angles entre le système de capteur (325A, 325B) et des points au sol dans le champ au moins une distance seuil devant un composant de la machine agricole (300) ;
la génération d'une carte de terrain du sol autour de la machine agricole (300) sur la base des données de mesure provenant du système de capteur (325A, 325B) ;
la détermination d'une hauteur de poutre actionnable cible pour chaque point au sol à la première distance seuil devant le composant de la machine agricole (300) sur la base de la carte de terrain ; et
l'ajustement, par le système d'actionneur (315), de la position de la poutre actionnable (320A, 320B) sur la base des données de mesure et des hauteurs de poutre actionnable cible lorsque la machine agricole (300) se déplace vers les points au sol, dans lequel une hauteur de la poutre actionnable (320A, 320B) par rapport au champ se situe à une seconde distance seuil de la hauteur de poutre actionnable cible correspondant à chaque point au sol avant le passage du composant au-dessus de chaque point au sol.

10. Procédé selon la revendication 9, dans lequel la distance seuil est d'au moins 0,5 mètre devant la poutre actionnable (320A, 320B).

11. Procédé selon la revendication 9, dans lequel le système de capteur (325A, 325B) est orienté dans une direction vers l'avant et une direction vers le bas.

12. Procédé selon la revendication 9, dans lequel une hauteur de poutre actionnable cible est déterminée sur la base de :
i) une distance de détection du système de capteur (325A, 325B), une vitesse de la machine agricole (300) se déplaçant dans le champ et une autorité d'actionneur du système d'actionneur (315) ; ou
ii) au moins l'un de : une culture dans le champ, une hauteur de la culture dans le champ, un mécanisme de traitement couplé à la poutre actionnable (320A, 320B) ou une variabilité de hauteur du sol.

13. Procédé selon la revendication 9, comprenant en outre :
la génération, par le système de capteur (325A, 325B), de données de mesure indicatives d'une hauteur d'une culture dans le champ ; ou
en réponse au fait qu'une variabilité de hauteur du sol dépasse une valeur de variabilité seuil, l'élévation de la poutre actionnable (320A, 320B) au-dessus d'une position de sécurité prédéterminée.

14. Procédé selon la revendication 9, dans lequel le composant est la poutre actionnable (320A, 320B) ou un mécanisme de locomotion de la machine agricole (300).

15. Support de stockage non transitoire lisible par ordinateur comprenant des instructions stockées qui, lorsqu'elles sont exécutées par un système informatique, amènent une machine agricole selon la revendication 1 à effectuer des opérations comprenant :
le déplacement, par la machine agricole (300), dans un champ, la machine agricole (300) comprenant une poutre actionnable (320A, 320B) s'étendant en éloignement d'un corps (310) de la machine agricole (300) et un système d'actionneur (315) conçu pour commander une position de la poutre actionnable (320A, 320B) par rapport au corps (310) de la machine agricole (300) ;
la génération, par un système de capteur (325A, 325B), de données de mesure indicatives des distances et des angles entre le système de capteur (325A, 325B) et des points au sol dans le champ au moins une distance seuil devant un composant de la machine agricole (300) ;
la génération d'une carte de terrain du sol autour de la machine agricole (300) sur la base des données de mesure provenant du système de capteur ;
la détermination d'une hauteur de poutre actionnable cible pour chaque point au sol à la première distance seuil devant le composant de la machine agricole (300) sur la base de la carte de terrain ; et
l'ajustement, par le système d'actionneur (315), de la position de la poutre actionnable (320A, 320B) sur la base des données de mesure et des hauteurs de poutre actionnable cible lorsque la machine agricole (300) se déplace vers les points au sol, dans lequel une hauteur de la poutre actionnable (320A, 320B) par rapport au champ se situe à une seconde distance seuil de la hauteur de poutre actionnable cible correspondant à chaque point au sol avant le passage du composant au-dessus de chaque point au sol.
